# EUROPÄISCHE PATENTSCHRIFT

(11) **EP 3 063 732 B1**
(45) Veröffentlichungstag und Bekanntmachung des Hinweises auf die Patenterteilung: **14.02.2024**
(21) Anmeldenummer: 14766722.4
(22) Anmeldetag: 17.09.2014
(51) Int. Cl.: G06V 20/58, B60W 40/04

(54) **SITUATIONSANALYSE FÜR EIN FAHRERASSISTENZSYSTEM**
SITUATION ANALYSIS FOR A DRIVER ASSISTANCE SYSTEM
ANALYSE DE LA SITUATION POUR UN SYSTÈME D'ASSISTANCE AU CONDUCTEUR

(30) Priorität: 31.10.2013 DE 102013222190
(43) Veröffentlichungstag der Anmeldung: 07.09.2016
(73) Patentinhaber: Robert Bosch GmbH, 70442 Stuttgart (DE)
(72) Erfinder: BUERKLE, Lutz, 70199 Stuttgart (DE); GLAESER, Claudius, 71254 Ditzingen (DE); MICHALKE, Thomas, 70195 Stuttgart (DE)
(86) Internationale Anmeldenummer: PCT/EP2014/069770
(87) Internationale Veröffentlichungsnummer: WO 2015/062781

(56) Entgegenhaltungen:
- WO-A1-2009/064172
- KR-A- 20130 101 913
- BERTOZZI M ET AL: "GOLD: A PARALLEL REAL-TIME STEREO VISION SYSTEM FOR GENERIC OBSTACLE AND LANE DETECTION", IEEE TRANSACTIONS ON IMAGE PROCESSING, IEEE SERVICE CENTER, PISCATAWAY, NJ, US, Bd. 7, Nr. 1, 1. Januar 1998 (1998-01-01), Seiten 62-80, XP000727376, ISSN: 1057-7149, DOI: 10.1109/83.650851
- GANG YI JIANG ET AL: "Lane and obstacle detection based on fast inverse perspective mapping algorithm", SYSTEMS, MAN, AND CYBERNETICS, 2000 IEEE INTERNATIONAL CONFERENCE ON NASHVILLE, TN, USA 8-11 OCT. 2000, PISCATAWAY, NJ, USA,IEEE, US, Bd. 4, 8. Oktober 2000 (2000-10-08), Seiten 2969-2974, XP010523611, DOI: 10.1109/ICSMC.2000.884452 ISBN: 978-0-7803-6583-4
- MATTHIAS SCHREIER ET AL: "Robust free space detection in occupancy grid maps by methods of image analysis and dynamic B-spline contour tracking", INTELLIGENT TRANSPORTATION SYSTEMS (ITSC), 2012 15TH INTERNATIONAL IEEE CONFERENCE ON, IEEE, 16 September 2012 (2012-09-16), pages 514-521, XP032263968, DOI: 10.1109/ITSC.2012.6338636 ISBN: 978-1-4673-3064-0

## Beschreibung

Die Erfindung betrifft ein Fahrerassistenzsystem. Insbesondere betrifft die Erfindung eine Situationsanalyse für das Fahrerassistenzsystem auf der Basis von Abtastungen eines Umfelds.

### Stand der Technik

Das Dokument BERTOZZI M ET AL: "GOLD: A PARALLEL REAL_TIME STEREO VISION SYSTEM FOR GENERIC OBSTACLE AND LANE DETECTION," IEEE TRANSACTIONS ON IMAGE PROCESSING, Bd. 7, Nr. 1, 1. Januar 1998 (1998-01-01), Seiten 62-80, offenbart ein Verfahren zur Situationsanalyse für ein Fahrerassistenzsystem an Bord eines Kraftfahrzeugs.

Das Dokument SCHREIER M ET AL: "Robust free space detection in occupancy grid maps by methods of image analysis and dynamic B-spline contour tracking", 15th INT CONF ON INTELLIGENT TRANSPORTATION SYSTEMS, 16. September 2012 (2012-09-16), Seiten 514-521, offenbart ein Verfahren zum Detektieren eines freien Raumes für ein Fahrerassistenzsystem.

Ein Fahrerassistenzsystem an Bord eines Kraftfahrzeugs ist dazu eingerichtet, einen Fahrer bei seiner Aufgabe des Führens des Kraftfahrzeugs zu entlasten. Dabei kann ein Signal an den Fahrer ausgegeben werden, um die Bewegung des Kraftfahrzeugs in einem vorgegebenen Sinn zu steuern, oder es kann unmittelbar in die Bewegungssteuerung des Kraftfahrzeugs eingegriffen werden. Beispielsweise kann ein Parkassistent den Fahrer beim Einparken in eine Parklücke dahingehend unterstützen, dass die Umgebung des Kraftfahrzeugs abgetastet wird und der Fahrer auf Hindernisse hingewiesen wird. Der Parkassistent kann auch teilweise automatisiert arbeiten, in dem beispielsweise ein Lenkwinkel automatisch bestimmt und eingestellt wird, während eine Geschwindigkeitssteuerung durch den Fahrer erfolgt. Wird der Parkassistent vollautomatisch betrieben, so kann der Einparkvorgang vollständig ohne Zutun des Fahrers ablaufen.

Weitere beispielhafte Fahrerassistenzsysteme umfassen einen Bremsassistent, einen Abstandswarner, einen Spurhalterassistent oder eine Verkehrszeichenerkennung. Den Fahrerassistenzsystemen ist gemeinsam, dass sie Informationen verarbeiten, die aus einer Umgebung des Kraftfahrzeugs abgetastet sind. Um das Abtasten der Umgebung und die Verarbeitung der Sensorsignale möglichst universell zu halten, ist es üblich, die Verarbeitung in sogenannten Schichten durchzuführen. Dabei macht jede Schicht Gebrauch von den Ergebnissen der nächst tieferen Ebene. In der ersten Ebene wird die Umgebung des Kraftfahrzeugs mittels eines oder mehrerer Sensoren abgetastet. In einer zweiten Schicht wird auf der Basis der Sensorsignale ein Umfeldmodell für das Kraftfahrzeug erstellt. In einer dritten Schicht erfolgt eine Situationsanalyse. In einer vierten Schicht wird eine Funktion bestimmt und in einer fünften Schicht erfolgt eine Ausgabe eines Signals an den Fahrer oder ein Eingriff in die Steuerung des Kraftfahrzeugs.

Nachteilig an der bekannten Vorgehensweise ist, dass die Verarbeitung von Daten auf einer niedrigen Schicht durchgeführt werden muss, ohne die genauen Bedürfnisse der höheren Schichten zu kennen. Beispielsweise kann ein Parkassistent höher aufgelöste Entfernungen zu umliegenden Hindernissen benötigen, während eine Messrate von untergeordneter Bedeutung ist. Ein Bremsassistent hingegen kann eine hohe Messrate benötigen, wobei Abstände zu umliegenden Hindernissen gegebenenfalls weniger genau bestimmt werden müssen.

Der Erfindung liegt die Aufgabe zugrunde, eine verbesserte Situationsanalyse bereitzustellen, um eine verbesserte Ausgangslage für eine nachgeschaltete Fahrerassistenzfunktion zu bilden. Die Erfindung löst diese Aufgabe mittels der Gegenstände der unabhängigen Ansprüche. Unteransprüche geben bevorzugte Ausführungsformen wieder.

### Offenbarung der Erfindung

Ein erfindungsgemäßes Verfahren zur Situationsanalyse für ein Fahrerassistenzsystem an Bord eines Kraftfahrzeugs umfasst Schritte des Bereitstellens einer Repräsentation einer Umgebung des Kraftfahrzeugs, wobei die Repräsentation eine Anordnung von Zellen umfasst, die vorbestimmten Abschnitten der Umgebung umkehrbar eindeutig zugeordnet sind, des Abtastens einer Umgebung des Kraftfahrzeugs mittels wenigstens eines Sensors, um ein Hindernis zu erfassen, und des Markierens von Zellen auf der Basis der Abtastung derart, dass eine Zelle, die einem hindernisfreien Abschnitt der Umgebung zugeordnet ist, eine erste Markierung trägt, und eine Zelle, die einem Abschnitt der Umgebung zugeordnet ist, in der ein Hindernis erfasst wurde, eine zweite Markierung trägt. Danach wird ein morphologischer Filter auf die Repräsentation angewandt, um Zellen, die durch das Kraftfahrzeug nicht erreicht werden können und zunächst die erste Markierung tragen, mit der zweiten Markierung zu versehen. Der morphologische Filter ist dazu eingerichtet, ein morphologisches Schließen mittels eines Strukturelements durchzuführen. Das Strukturelement wird auf der Basis eines Umrisses des Kraftfahrzeugs bestimmt, wobei das Strukturelement Einschränkungen reflektiert aufgrund welcher Zellen nicht durch das Kraftfahrzeug erreichbar sind, wobei das Strukturelement auf der Basis eines Fahrzeugfreiheitsgrads bestimmt ist, der durch das Fahrerassistenzsystem vorgegeben ist,

Durch die Verwendung des morphologischen Filters kann eine verbesserte Unterdrückung von Messfehlern und Zusammenfassung von Informationen erfolgen. Das Ergebnis des morphologischen Filters kann eine Belegungskarte sein ("occupancy grid"), die von unterschiedlichen Fahrerassistenzsystemen weiter verwendet werden kann.

Die genaue Kenntnis des Umrisses des Kraftfahrzeugs kann so für die Verarbeitung der Zellen der Repräsentation des Umfelds des Kraftfahrzeugs verwendet werden. Auf diese Weise kann die Entscheidung, ob eine Zelle durch das Kraftfahrzeug erreicht werden kann oder nicht, mit verbesserter Trennschärfe durchgeführt werden. Dabei kann der Umriss des Kraftfahrzeugs je nach Aufgabenstellung beliebig genau definiert sein. Dadurch kann eine Verarbeitungsgeschwindigkeit zu Lasten der Genauigkeit gesteigert werden und umgekehrt.

Dadurch, dass das Strukturelement auf der Basis eines Fahrzeugfreiheitsgrads bestimmt ist, der durch das Fahrerassistenzsystem vorgegeben ist, kann auf einfache Weise die Verarbeitung durch den morphologischen Filter in Abhängigkeit der Bedürfnisse des Fahrerassistenzsystems gesteuert werden.

Der Fahrzeugfreiheitsgrad umfasst wenigstens eines von einer maximalen Beschleunigung, einem minimalen Kurvenradius und einer Verkehrsvorschrift. Auf diese Weise können unterschiedlichste Gründe, warum das Kraftfahrzeug eine vorbestimmte Zelle der Repräsentation nicht erreichen kann, in die Verarbeitung durch den morphologischen Filter miteinbezogen werden. Die dadurch entstehende Vorverarbeitung der Repräsentation, die als Belegungskarte aufgefasst werden kann, kann das nachgeschaltete Fahrerassistenzsystem entlasten und so zu einer Einsparung von Ressourcen beitragen.

In einer Ausführungsform ist der morphologische Filter dazu eingerichtet, eine Faltung mit einer morphologischen Nachverarbeitung durchzuführen.

In einer Ausführungsform sind in unterschiedlichen Bereichen der Umgebung unterschiedliche Fahrzeugfreiheitsgrade zugeordnet, wobei für jeden Bereich ein zugeordnetes Strukturelement bestimmt wird und der morphologische Filter bereichsweise mit dem jeweils zugeordneten Strukturelement abgewandt wird. Dadurch können unterschiedliche Bereiche, die unterschiedliche Relevanz für das Fahrerassistenzsystem haben, unterschiedlich behandelt werden. Beispielsweise kann eine Verarbeitung eines in Fahrtrichtung hinter dem Kraftfahrzeug liegenden Bereichs gröber oder gar nicht durchgeführt werden, während ein unmittelbar vor dem Kraftfahrzeug liegender Bereich mit besonderer Genauigkeit behandelt wird.

In einer bevorzugten Ausführungsform werden mehrere morphologische Filter angewandt und Ausgaben der morphologischen Filter derart miteinander kombiniert, dass nur Zellen die erste Markierung erhalten, die in den Ausgaben aller Filter die erste Markierung tragen. Dazu können die Filter nacheinander eingesetzt werden, wobei jeweils die Ausgabe eines Filters die Eingabe des folgenden Filters darstellt. Alternativ dazu kann auch eine parallele Filterung erfolgen, wobei mehrere Filter die gleiche Repräsentation als Eingabe akzeptieren und die beiden Ausgaben beispielsweise mittels einer logischen Bedingung bezüglich der ersten Markierung miteinander kombiniert werden. Sequentielle und parallele Anordnungen von morphologischen Filtern sind kaskadierbar.

In einer Ausführungsform wird eine Fahrtrajektorie für das Kraftfahrzeug bestimmt und der morphologische Filter wird auf der Basis der Fahrtrajektorie angewandt. Für eine Zelle, die einen größeren Abstand zu einer Zelle aufweist, die dem Kraftfahrzeug zugeordnet ist, kann auf diese Weise verbessert eine Erreichbarkeit bestimmt werden. So kann eine frühzeitige Reaktion des Fahrerassistenzsystems auf eine vorliegende Situation ermöglicht sein. Es kann auch eine Bewegungstrajektorie eines beweglichen Hindernisses in der Umgebung bestimmt werden, wobei der morphologische Filter auf der Basis der Bewegungstrajektorie angewandt wird. Dadurch können dynamische Aspekte eines beweglichen Hindernisses berücksichtigt werden. Insbesondere kann eine Kollision mit einem beweglichen Hindernis früher oder genauer bestimmt werden.

In den beiden letztgenannten Ausführungsformen kann das Strukturelement in Abhängigkeit der Trajektorie bestimmt werden. Beispielsweise kann das Strukturelement entlang der Trajektorie bewegt und gegebenenfalls in Abhängigkeit einer Trajektorienkrümmung gedreht werden.

In einer Weiterführung des Verfahrens kann auf der Basis von Zellen, die dem Kraftfahrzeug zugeordnet sind, ein angrenzendes Gebiet bestimmt werden, in dem alle Zellen die zweite Markierung tragen, wobei auf der Basis des Gebiets ein Signal zur Bewegungssteuerung des Kraftfahrzeugs bestimmt wird. Das Signal kann eine optische, akustische oder haptische Ausgabe an einen Fahrer des Kraftfahrzeugs umfassen; in einer anderen Ausführungsform kann auch ein unmittelbarer Eingriff in die Bewegungssteuerung des Kraftfahrzeugs mittels eines Aktors erfolgen. Der Aktor kann insbesondere eine Geschwindigkeits- oder Richtungssteuerung des Kraftfahrzeugs betreffen.

In noch einer Erweiterung des Verfahrens kann vor dem Anwenden des morphologischen Filters eine Strahlenverfolgung erfolgen, die von einer Zelle ausgeht, die dem Kraftfahrzeug zugeordnet ist. Zellen, die hindernisfrei in direkter Linie vom Kraftfahrzeug aus erreichbar sind, werden dabei mit der ersten Markierung, und Zellen, die vom Kraftfahrzeug aus hinter einem Hindernis liegen, mit der zweiten Markierung versehen. Dadurch kann auf einfache und effiziente Weise eine Ausgangsbasis zur Anwendung des morphologischen Filters hergestellt werden.

Ein erfindungsgemäßes Computerprogrammprodukt umfasst Programmcodemittel zur Durchführung des beschriebenen Verfahrens, wenn das Computerprogrammprodukt auf einer Verarbeitungseinrichtung abläuft oder auf einem computerlesbaren Datenträger gespeichert ist.

Eine erfindungsgemäße Vorrichtung zur Situationsanalyse für ein Fahrerassistenzsystem an Bord eines Kraftfahrzeugs umfasst einen Speicher zur Ablage einer Repräsentation einer Umgebung des Kraftfahrzeugs, wobei die Repräsentation eine Anordnung von Zellen umfasst, die vorbestimmten Abschnitten der Umgebung umkehrbar eindeutig zugeordnet sind, ferner eine Schnittstelle für einen Sensor zur Abtastung einer Umgebung des Kraftfahrzeugs, um ein Hindernis zu erfassen, und eine Verarbeitungseinrichtung zur Markierung von Zellen auf der Basis der Abtastung derart, dass eine Zelle, die einem hindernisfreien Abschnitt der Umgebung zugeordnet ist, eine erste Markierung trägt, und eine Zelle, die einem Abschnitt der Umgebung zugeordnet ist, in der ein Hindernis erfasst wurde, eine zweite Markierung trägt. Dabei ist die Verarbeitungseinrichtung dazu eingerichtet, einen morphologischen Filter auf die Repräsentation anzuwenden, um Zellen, die durch das Kraftfahrzeug nicht erreicht werden können, mit der zweiten Markierung zu versehen. Das Strukturelement ist auf der Basis eines Fahrzeugfreiheitsgrads bestimmt, der durch das Fahrerassistenzsystem vorgegeben ist. Der Fahrzeugfreiheitsgrad umfasst wenigstens eines von einer maximalen Beschleunigung, einem minimalen Kurvenradius und einer Verkehrsvorschrift. Auf diese Weise können unterschiedlichste Gründe, warum das Kraftfahrzeug eine vorbestimmte Zelle der Repräsentation nicht erreichen kann, in die Verarbeitung durch den morphologischen Filter miteinbezogen werden. Die dadurch entstehende Vorverarbeitung der Repräsentation, die als Belegungskarte aufgefasst werden kann, kann das nachgeschaltete Fahrerassistenzsystem entlasten und so zu einer Einsparung von Ressourcen beitragen.

Die Vorrichtung kann dazu verwendet werden, eine verbesserte Datenbasis für das Fahrerassistenzsystem bereitzustellen. In einer Ausführungsform kann die Vorrichtung von dem Fahrerassistenzsystem umfasst sein.

### Kurze Beschreibung der Figuren

Die Erfindung wird nun mit Bezug auf die beigefügten Figuren genauer beschrieben, in denen:
- Figur 1: eine Vorrichtung zur Situationsanalyse für ein Fahrerassistenzsystem an Bord eines Kraftfahrzeugs;
- Figur 2: ein Ablaufdiagramm eines Verfahrens zur Situationsanalyse für ein Fahrerassistenzsystem an Bord des Kraftfahrzeugs von Figur 1;
- Figur 3: eine Übersicht über Zwischenschritte des Verfahrens von Figur 2;
- Figur 4: eine Illustration der Arbeitsweise eines morphologischen Filters;
- Figur 5: eine Illustration der Arbeitsweise eines morphologischen Filters für das Kraftfahrzeug von Figur 1 in einem ersten Szenario;
- Figur 6: eine Illustration der Arbeitsweise eines morphologischen Filters von Figur 1 in einem zweiten Szenario, und
- Figur 7: Illustrationen einer Variation von morphologischen Strukturelementen in Abhängigkeit einer Trajektorie des Kraftfahrzeugs von Figur 1, darstellt.

### Beschreibung von Ausführungsformen

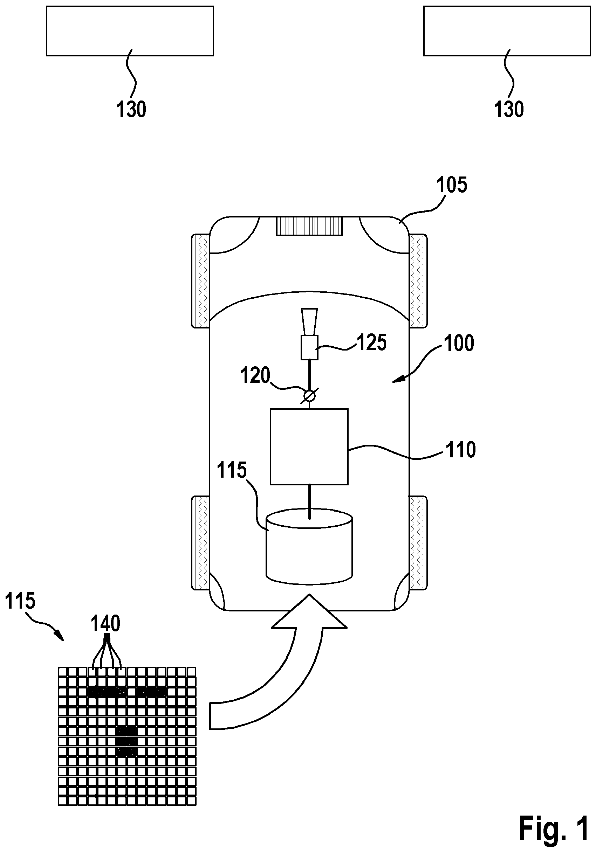

Figur 1 zeigt eine Vorrichtung 100 zur Situationsanalyse für ein Fahrerassistenzsystem an Bord eines Kraftfahrzeugs 105. Die Vorrichtung 100 umfasst eine Verarbeitungseinrichtung 110, einen Speicher 115 und eine Schnittstelle 120. Die Schnittstelle 120 ist zur Verbindung mit einem Sensor 125 eingerichtet, wobei der Sensor 125 dazu geeignet ist, eine Umgebung des Kraftfahrzeugs 105 abzutasten, um ein Hindernis 130 zu erfassen. Der Sensor 125 kann insbesondere einen optischen Sensor, einen Radar- oder LIDAR-Sensor oder eine Kombination aus mehreren Sensoren umfassen. In Figur 1 sind zwei exemplarische Hindernisse 130 dargestellt, die von dem Kraftfahrzeug 105 nicht überfahren werden dürfen. Ein Hindernis 130 kann beispielsweise eine Fahrbahnbegrenzung, ein anderes Kraftfahrzeug, ein Gebäude, eine Person oder ein anderes Hindernis umfassen. Das Hindernis 130 kann in der Umgebung beweglich oder unbeweglich sein.

Der Speicher 115 ist zur Ablage einer Repräsentation 135 der Umgebung des Kraftfahrzeugs 105 eingerichtet. Eine beispielhafte, schematische Repräsentation 135 ist in Figur 1 dargestellt. Die Repräsentation 135 umfasst eine Anordnung von Zellen 140, wobei jede Zelle 140 einem vorbestimmten Abschnitt der Umgebung umkehrbar eindeutig (bijektiv) zugeordnet ist. Bevorzugterweise und in der Darstellung von Figur 1 ist die Anordnung der Zellen 140 zweidimensional, so dass Nachbarschaftsverhältnisse der Zellen 140 korrespondierende Nachbarschaftsverhältnisse zugeordneter Abschnitte widerspiegeln.

Ungefähr in der Mitte der Repräsentation 135 sind sechs Zellen 140 dargestellt, die hier beispielhaft das Kraftfahrzeug 105 repräsentieren. Jede Zelle 140 kann eine Markierung tragen, wobei eine erste Markierung eine Zelle kennzeichnet, die einem hindernisfreien Abschnitt der Umgebung zugeordnet ist und eine zweite Markierung eine Zelle markiert, die einem Abschnitt der Umgebung zugeordnet ist, in der ein Hindernis 130 erfasst wurde. Die beiden Markierungen schließen einander wechselseitig aus. In der Darstellung von Figur 1 sind Zellen 140 mit der ersten Markierung hell und solche mit der zweiten Markierung dunkel dargestellt. In einer Ausführungsform kann jede Zelle 140 der Repräsentation 135 nur entweder die erste oder die zweite Markierung tragen. Beispielsweise kann die Repräsentation 135 als Bitmap implementiert werden.

Die Verarbeitungseinrichtung 110 ist dazu eingerichtet, die Sensordaten des Sensors 125 über die Schnittstelle 120 entgegenzunehmen und die Zellen 140 der Repräsentation 135 in Abhängigkeit der Sensorinformationen mit der ersten oder der zweiten Markierung zu versehen. Sind mehrere Sensoren 125 vorgesehen, so kann eine Kombination der Sensorsignale erfolgen. Dabei können beispielsweise nur solche Zellen 140 mit der ersten Markierung versehen werden, die Abschnitten der Umgebung des Kraftfahrzeugs 105 zugeordnet sind, in denen mittels keiner Sensoren 125 ein Hindernis 130 erfasst wurde.

Ferner ist die Verarbeitungseinrichtung 110 dazu eingerichtet, nach dem Zuweisen von Markierungen auf die Zellen 140 einen morphologischen Filter auf die Repräsentation 135 anzuwenden, um Zellen 140, die durch das Kraftfahrzeug 105 nicht erreicht werden können, mit der zweiten Markierung zu versehen. Dabei können insbesondere Zellen 140, die zunächst die erste Markierung tragen, mit der zweiten Markierung versehen werden. Die Verarbeitungseinrichtung 110 umfasst bevorzugterweise einen programmierbaren Mikrocomputer.

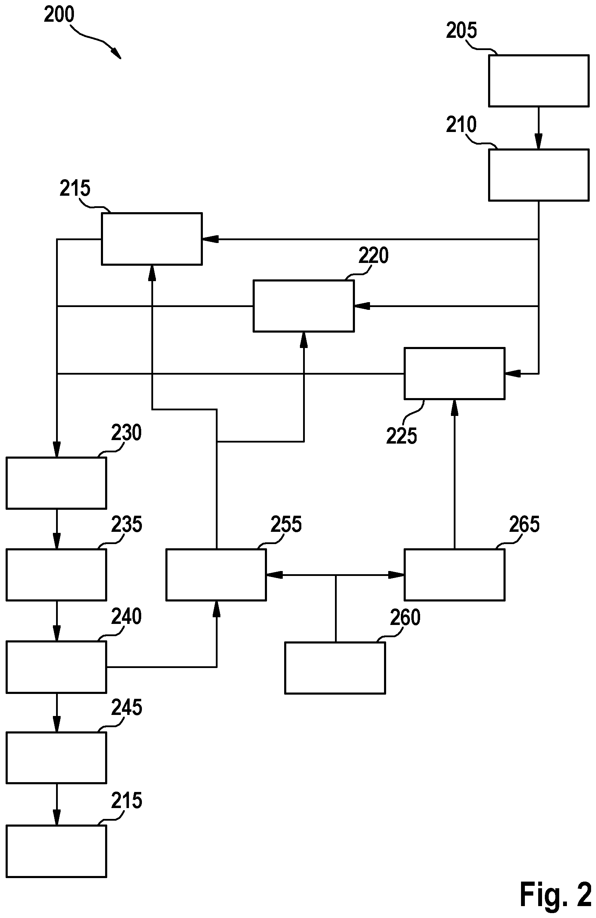

Figur 2 zeigt ein Ablaufdiagramm eines Verfahrens 200 zur Situationsanalyse für ein Fahrerassistenzsystem an Bord des Kraftfahrzeugs 105 von Figur 1. Das Verfahren 200 ist insbesondere zum Ablaufen auf der Vorrichtung 100 und insbesondere auf der Verarbeitungseinrichtung 110 von Figur 1 eingerichtet.

In einem Schritt 205 wird die Umgebung des Kraftfahrzeugs 105 abgetastet. Gleichzeitig werden Zellen 140 der Repräsentation 135 in Abhängigkeit der erfolgten Abtastung markiert. Dieser Schritt 105 ist nicht notwendigerweise vom Verfahren 200 umfasst. Bevorzugterweise erfolgt das Abtasten mittels des einen oder den mehreren Sensoren 125. In einem optionalen Schritt 210 erfolgt eine Strahlenverfolgung ("Raytracing"). Ausgehend von Zellen 140, die dem Kraftfahrzeug 105 zugeordnet sind, wird eine Linie über benachbarte Zellen 140 verfolgt. Stößt die Linie auf eine Zelle 140 mit der zweiten Markierung, so werden alle weiter entfernten Zellen 140 unter der Linie mit der zweiten Markierung versehen. Dadurch wird modelliert, dass ein Bereich, der durch ein Hindernis 130 verschattet ist, ebenfalls nicht durch das Kraftfahrzeug 105 erreicht werden kann. Zellen 140, die unter der Linie liegen, bevor diese auf eine Zelle 140 mit der zweiten Markierung gestoßen ist, werden bzw. bleiben mit der ersten Markierung versehen. Anschließend wird die Richtung der Linie verändert und die Vorgehensweise wiederholt, bis alle Richtungen bzw. ein vorbestimmter, eingeschränkter Richtungsbereich von der Linie überstrichen wurde.

Die Repräsentation 135 dient dann als Eingabe für einen oder morphologische Filter. Die morphologischen Filter können sequentiell oder parallel angewendet werden. In der exemplarischen Anwendung von Figur 2 sind drei morphologische Filter vorgesehen. Ein erster Filter wird in einem Schritt 215 und ein zweiter parallel dazu in einem Schritt 220 angewandt. In den Schritten 215 und 220 erfolgt jeweils ein morphologisches Schließen mittels eines Strukturelements, dessen Zustandekommen unten genauer beschrieben wird. In einem Schritt 225 wird als dritter morphologischer Filter eine Faltung mit einer morphologischen Nachverarbeitung durchgeführt. Die Bereitstellung eines Filterkerns für die Faltung wird unten ebenfalls noch genauer ausgeführt.

Die Ausgaben der morphologischen Filter der Schritte 215, 220 und 225 werden in einem Schritt 230 zusammengefasst, falls erforderlich. In einer Ausführungsform wird in jedem der Schritte 215, 220, 225 eine eigene Repräsentation 135 erstellt, die in Schritt 230 anhand der Oder-Bedingung bezüglich der zweiten Markierung miteinander verknüpft werden. Das Verknüpfen kann als Operation auf Bitmaps erfolgen.

In einem Schritt 235 wird optional ein stationärer Fahrkorridor des Kraftfahrzeugs 105 bestimmt. Diese Bestimmung erfolgt auf der Basis der Daten, die vom Schritt 230 bereitgestellt wurden.

In einem Schritt 240 wird optional eine Fahrtrajektorie des Kraftfahrzeugs 105 bestimmt. Weiter optional kann auch eine Bewegungstrajektorie eines der Hindernisse 130 bestimmt werden. Beide Trajektorien können auf der Basis von zuvor bestimmten Sensorsignalen des Sensors 125 oder auf der Basis anderer Informationsquellen bestimmt werden. In einem Schritt 245 wird ein an das Kraftfahrzeug 105 angrenzendes Gebiet bestimmt, dessen Zellen 140 sämtlich die erste Markierung tragen. Dieses Gebiet entspricht einer freien Fläche um das Kraftfahrzeug 105. Das bestimmte Gebiet kann anschließend ausgegeben werden. Alternativ kann auch in einem Schritt 250 ein Signal zur Bewegungssteuerung des Kraftfahrzeugs auf der Basis des bestimmten freien Gebiets bestimmt und dieses ausgegeben werden. Das Signal kann sich an einen Fahrer des Kraftfahrzeugs 105 richten und insbesondere akustisch, optisch oder haptisch dargebracht werden, oder es kann mittels eines Aktors unmittelbar auf die Bewegungssteuerung des Kraftfahrzeugs 105 Einfluss genommen werden. Beispielsweise kann ein Lenkwinkel verändert, eine Bremse aktiviert oder freigegeben oder ein Antriebsmotor in seinem Antriebsmoment verändert werden. In einer anderen Ausführungsform können auch bereits die im Schritt 230 miteinander kombinierten Ausgaben der morphologischen Filter der Schritte 215, 220 und 225 ausgegeben werden.

Auf der Basis der Ergebnisse des Schritts 240 werden in einem Schritt 255 eines oder mehrere morphologische Strukturelemente bestimmt, auf deren Basis ein morphologisches Schließen, insbesondere in den Schritten 215 oder 220, erfolgen kann. Die Bestimmung der Strukturelemente im Schritt 255 erfolgt zusätzlich auf der Basis eines oder mehrerer Fahrzeugfreiheitsgrade des Kraftfahrzeugs 105. Die Fahrzeugfreiheitsgrade können insbesondere eine Fahrzeugausdehnung in unterschiedlichen Richtungen, einen Umriss, Kartendaten bezüglich Verkehrswegen, Verkehrszeichen in der Umgebung des Kraftfahrzeugs 105 und ähnliche Einschränkungen umfassen. Die im Schritt 255 bereitgestellten Strukturelemente reflektieren diese Einschränkungen, sodass das morphologische Schließen in den Schritten 215 und 220 solche Zellen 140 mit der zweiten Markierung versieht, die aufgrund der jeweiligen Einschränkung nicht durch das Kraftfahrzeug 105 erreichbar sind.

Die Fahrzeugfreiheitsgrade des Schritts 260 finden bevorzugterweise auch Einfluss in einen Schritt 265, in dem ein Filterkern für die Faltung im Schritt 225 bereitgestellt wird.

Das Verfahren 200 wird üblicherweise periodisch durchlaufen. In einer Ausführungsform wird in Schritt 210 oder 230 auf die Repräsentation 135 des vorhergehenden Durchlaufs zurückgegriffen. So können neue und alte Informationen miteinander kombiniert werden.

Die Wahl der morphologischen Filter der Schritte 215, 220 und 225 sowie die Bereitstellung der jeweiligen Parameter für die morphologischen Filter in den Schritten 255 und 265 erfolgen in Abhängigkeit eines Fahrerassistenzsystems, für das die Situationsanalyse mittels des Verfahrens 200 durchgeführt werden soll. Sind an Bord des Kraftfahrzeugs 105 unterschiedliche Fahrerassistenzsysteme vorgesehen, so können mehrere Instanzen des Verfahrens 200 auf den gleichen Sensordaten des Sensors 125 ausgeführt werden. In einer ersten Instanz kann beispielsweise für einen Einparkassistent ein minimaler Kurvenradius des Kraftfahrzeugs 105 berücksichtigt werden, während für einen Bremsassistent eine zweite Instanz des Verfahrens 200 stattdessen eine maximale Beschleunigung bzw. Verzögerung des Kraftfahrzeugs 105 stärker gewichtet.

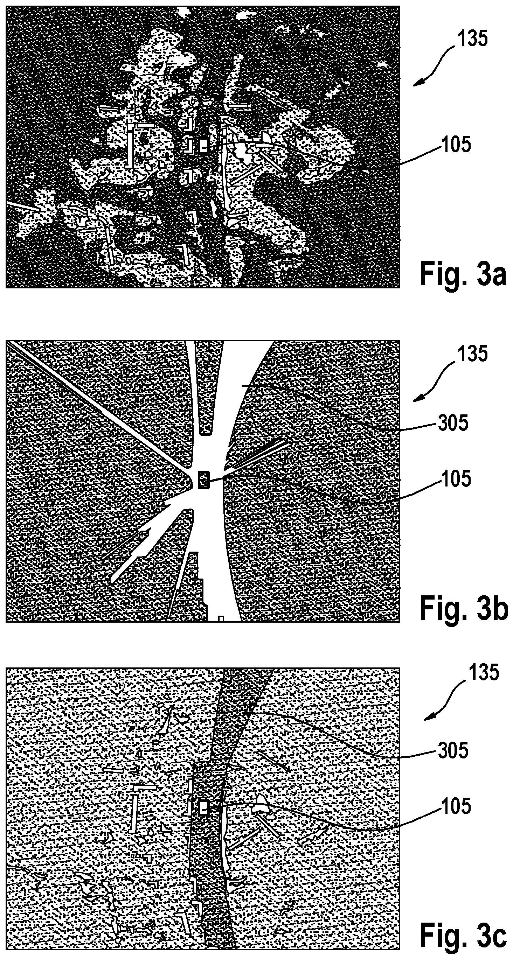

Mit Bezug auf die folgenden Figuren 3 bis 7 werden einzelne Aspekte des Verfahrens 200 von Figur 2 genauer erläutert.

Figur 3 zeigt eine Übersicht über Zwischenschritte des Verfahrens 200 von Figur 2. Figur 3a zeigt eine Repräsentation 135 einer Umgebung des Kraftfahrzeugs 105 nach dem Abtasten mittels des Sensors 125 im Schritt 205. Die dargestellte Situation zeigt ein Folgen einer Kolonne von Kraftfahrzeugen durch das Kraftfahrzeug 105. Dunkel markierte Zellen 140 tragen hier die erste Markierung, während hell markierte Zellen 140 die zweite Markierung tragen. Mittelhell markierte Zellen 140 sind aus hier nicht näher zu verfolgenden Gründen weggefiltert. Ein weißes Rechteck etwa in der Mitte der Darstellung repräsentiert das Kraftfahrzeug 105.

Figur 3b zeigt die Repräsentation 135 nach der Strahlenverfolgung im Schritt 210. Hell dargestellte Zellen tragen die erste Markierung, dunkel dargestellte Zellen die zweite Markierung. Der zusammenhängende helle Bereich 305 repräsentiert eine freie Fläche um das Kraftfahrzeug 105. Das Kraftfahrzeug 105 ist durch ein dunkles Rechteck etwa in der Mitte der Darstellung von Figur 3b gekennzeichnet.

Figur 3c zeigt die Darstellung 135 nach dem Durchlaufen wenigstens eines morphologischen Filters der Schritte 215, 220 und 225. Dabei wurde wenigstens ein morphologisches Schließen mit einem Strukturelement durchgeführt, das die Abmessungen des Kraftfahrzeugs 105 auf der Repräsentation 135 verkörpert. Das Kraftfahrzeug 105 ist durch ein helles Rechteck etwa in der Mitte der Darstellung gekennzeichnet. Zellen 140 mit der ersten Markierung sind dunkel, Zellen mit der zweiten Markierung hell dargestellt. Mittelhell dargestellte Bereiche sind hier nicht von weiterem Interesse, sie können als hell eingefärbt betrachtet werden. Der freie Bereich 305 um das Kraftfahrzeug 105 herum wurde dahingehend verkleinert, dass insbesondere solche Bereiche, für deren Befahrung das Kraftfahrzeug 105 zu breit oder zu lang ist, aus dem freien Bereich 305 entfernt wurden.

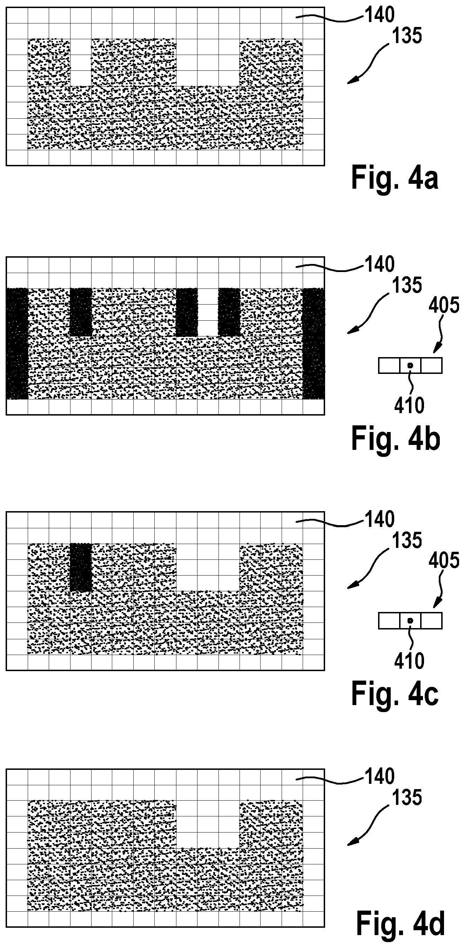

Figur 4 zeigt eine Illustration der Arbeitsweise eines morphologischen Filters, insbesondere zum morphologischen Schließen. In Figur 4a ist der Repräsentation 135 nach dem Abtasten der Umgebung des Kraftfahrzeugs 105 mittels des Sensors 125 im Schritt 205 beispielhaft dargestellt. Hell dargestellte Zellen 140 tragen die erste Markierung, dunkel dargestellte Zellen 140 die erste zweite Markierung.

Figur 4b zeigt die Repräsentation 135 nach der Anwendung eines morphologischen Schließens auf der Basis des rechts dargestellten, beispielhaften Strukturelements 105. Das Strukturelement 405 umfasst eine Anzahl Felder, die in einer vorbestimmten Anordnung zueinander stehen, wobei eines der Felder als Anker 410 ausgezeichnet ist. Bei der dargestellten morphologischen Dilatation wird das Strukturelement 405 schrittweise so auf die Repräsentation 135 gelegt, dass der Anker 410 jeweils auf einer anderen Zelle zu liegen kommt. Dabei wird jedes Mal jede Zelle 140, die sich unter einem der Felder des Strukturelements 405 befindet, mit der zweiten Markierung versehen. Im Ergebnis wird die dargestellte Struktur von Figur 4a in Figur 4b aufgebläht (dilatiert).

Die zum Delatieren inverse Funktion des morphologischen Schließens ist die Erosion, die in Figur 4c dargestellt ist. Dabei wird beispielhaft von dem gleichen Strukturelement 405 ausgegangen. Als Eingabe für die Erosion dient die Ausgabe der Dilatation von Figur 4b. Bei der Erosion wird wieder das Strukturelement 405 schrittweise über die Repräsentation 135 geführt, wobei die unter dem Anker 410 befindliche Zelle 145 immer dann die zweite Markierung erhält, wenn alle Felder des Strukturelements 405 über Zellen stehen, die bereits die zweite Markierung tragen. Andernfalls wird die unter dem Anker 410 befindliche Zelle mit der ersten Markierung versehen. Im Ergebnis wird die dargestellte Struktur von Figur 4b in Figur 4c abgetragen (erodiert).

Das Ergebnis der Nacheinanderdurchführung von Dilatation und Erosion auf die Repräsentation 135 von Figur 4a ist in Figur 4d zu sehen. Die ursprünglich vorhandene Vertiefung oben links in Figur 4a ist geschlossen worden, da sie schmaler als das Strukturelement 405 ist. Ansonsten sind die Markierungen der Zellen 140 beibehalten worden.

Repräsentiert der helle Bereich in Figur 4a eine durch das Kraftfahrzeug 105 befahrbare Fläche und modelliert das Strukturelement 405 die Breite des Kraftfahrzeugs 105, so wird durch die dargestellte Operation ein Weg, der zum Befahren durch das Kraftfahrzeug 105 zu schmal ist, als nicht befahrbar in der Repräsentation 135 markiert.

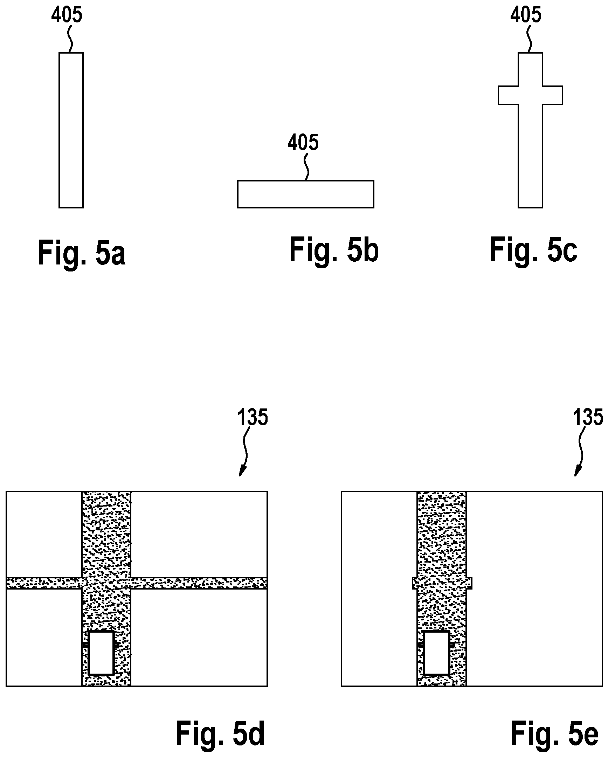

Figur 5 zeigt eine Illustration des Arbeitsweise eines morphologischen Filters der Filter 215, 220 oder 225 des Verfahrens 205 von Figur 2. Figur 5a zeigt ein erstes morphologisches Strukturelement 405 zur Modellierung der Länge des Kraftfahrzeugs 105, Figur 5b ein zweites morphologisches Strukturelement 405 zur Modellierung der Breite des Kraftfahrzeugs 105 und Figur 5c ein drittes morphologisches Strukturelement zur Modellierung des Umrisses des Kraftfahrzeugs 105 einschließlich eines rechten und eines linken Außenspiegels. Größen und Proportionen der dargestellten Strukturelemente 405 sind rein exemplarisch.

Figur 5d zeigt eine Repräsentation 135 nach dem Abtasten der Umgebung des Kraftfahrzeugs 105 im Schritt 205 des Verfahrens 200. Dunkel dargestellte Zellen 140 tragen die erste Markierung, hell dargestellte Zellen 140 die zweite Markierung. Das Kraftfahrzeug 105 ist im unteren Bereich samt seiner Außenspiegel dargestellt. Das Kraftfahrzeug 105 befindet sich auf einer Straße, von der rechts und links schmale Seitenwege abzweigen, die zu schmal sind, als das sie mit dem Kraftfahrzeug 105 befahren werden könnten. Allerdings kann einer der Außenspiegel des Kraftfahrzeugs 105 in den Weg hineinragen, wenn das Kraftfahrzeug 105 auf der Straße ganz nach rechts oder ganz nach links gebracht werden soll, beispielsweise um ein entgegenkommendes Kraftfahrzeug passieren zu lassen.

Eine Anwendung des Strukturelements 405 aus Figur 5c auf die Repräsentation 135 von Figur 5d liefert die Repräsentation 135 von Figur 5e. Durch das Berücksichtigen der Außenspiegel im Strukturelement 405 fallen die Seitenwege nur so weit weg, wie sie zur Aufnahme der Außenspiegel nicht verwendet werden können.

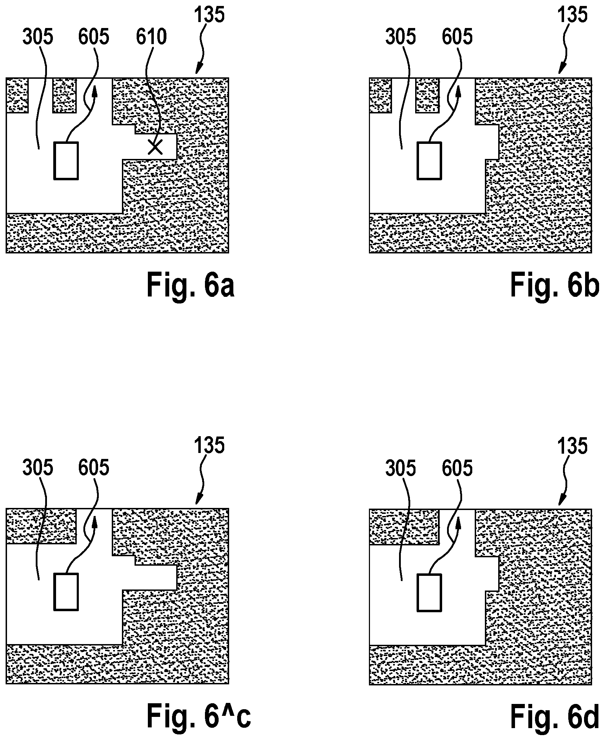

Figur 6 zeigt eine Illustration der Arbeitsweise eines morphologischen Filters von Figur 1 in einem zweiten Szenario. In Figuren 6a bis 6d sind jeweils Repräsentationen 135 dargestellt, wobei hell dargestellte Zellen 140 die erste Markierung und dunkel dargestellte Zellen 140 die zweite Markierung tragen. Ein helles Rechteck repräsentiert das Kraftfahrzeug 105. Vom Kraftfahrzeug 105 aus geht eine beispielsweise im Schritt 240 bestimmte Fahrtrajektorie 605 des Kraftfahrzeugs 105. Ein Fahrverbot 610 bestimmt, dass ein mit einem Kreuz markierter Bereich in der Darstellung von Figur 6a nicht befahren werden darf.

Figur 6a zeigt den initialen Freiraum. Figur 6b zeigt das Ergebnis eines morphologischen Schließens auf der Basis des Strukturelements 405 von Figur 5a, welches die Fahrzeuglänge des Kraftfahrzeugs 105 repräsentiert. Durch die Operation ist der als verboten markierte Bereich aus dem freien Bereich 305 um das Kraftfahrzeug 105 entfernt worden. Figur 6c zeigt das Ergebnis eines morphologischen Schließens der in Figur 6a dargestellten Situation auf der Basis des Strukturelements 405 aus Figur 5b, welches die Breite des Kraftfahrzeugs 105 modelliert. Dabei ist der Weg oben links in Figur 6A aus dem freien Bereich um das Kraftfahrzeug 105 entfernt worden, da das Kraftfahrzeug 105 zu breit ist, um diesen Weg zu befahren.

Figur 6d zeigt die Kombination der Ergebnisse beider Operationen aus den Figuren 6b und 6c. Der um das Kraftfahrzeug liegende freie Bereich 305 erfüllt nun die Vorgaben der physikalischen Befahrbarkeit (bezüglich der Fahrzeugbreite) und der legalen Befahrbarkeit (Fahrverbot).

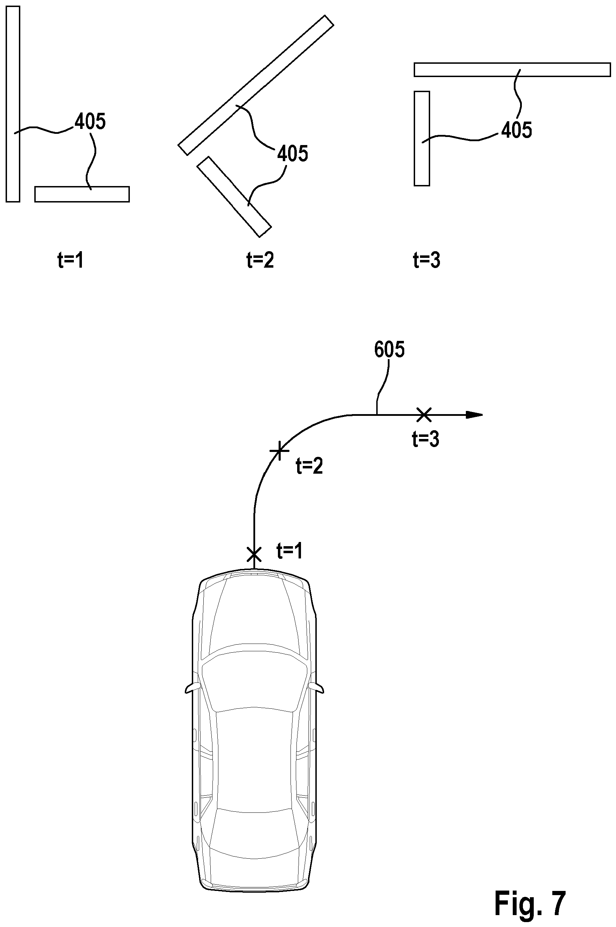

Figur 7 zeigt eine Illustration einer Variation von morphologischen Strukturelementen 405 in Abhängigkeit der Trajektorie 605 des Kraftfahrzeugs 105. Die Trajektorie 605 beschreibt eine 90-Grad-Kurve nach rechts. Zu einem ersten Zeitpunkt t = 1 ist das Kraftfahrzeug 105 in der Darstellung von Figur 7 vertikal ausgerichtet, zu einem zweiten Zeitpunkt t = 2 diagonal nach rechts oben und zu einem dritten Zeitpunkt t = 3 horizontal nach rechts.

Strukturelemente 405, die zum Zeitpunkt t = 1 korrespondieren, betreffen eine Länge und eine Breite des Kraftfahrzeugs 105. Beide Strukturelemente 405 werden entsprechend der Lage des Kraftfahrzeugs 105 in den Zeitpunkten t = 2 und t = 3 bezüglich ihrer Darstellungen von t = 1 um 45 Grad bzw. 90 Grade nach rechts gedreht. Bezüglich einer Repräsentation 135, die sich nicht am Kraftfahrzeug 105 orientiert, ändert sich die Ausrichtung der größten Fahrzeugabmessung des Kraftfahrzeugs 105 zwischen den Zeitpunkten t = 1 und t = 3 um 90 Grad. Durch das berücksichtigen der Trajektorie 605 kann daher ein verbessertes morphologisches Filtern bezüglich des Umrisses des Kraftfahrzeugs 105 erfolgen, in dem insbesondere die Ausrichtung des Kraftfahrzeugs 105 um seine Hochachse bei der Bestimmung der morphologischen Strukturelemente 405 berücksichtigt wird.

In entsprechender Weise kann eine Bewegungstrajektorie eines Hindernisses 130 während zukünftiger Zeitpunkte berücksichtigt werden. Dabei können ein Umriss des Hindernisses 130 auf der Basis der Bewegungstrajektorie bestimmt und der freie Bereich 305 um das Kraftfahrzeug 105 in Abhängigkeit des verschobenen und gegebenenfalls verdrehten Umrisses des Hindernisses 130 bestimmt werden.

## Patentansprüche

1. Verfahren (200) zur Situationsanalyse für ein Fahrerassistenzsystem an Bord eines Kraftfahrzeugs (105), folgende Schritte umfassend:
- Bereitstellen einer Repräsentation (135) einer Umgebung des Kraftfahrzeugs (105), wobei die Repräsentation (135) eine Anordnung von Zellen (140) umfasst, die vorbestimmten Abschnitten der Umgebung umkehrbar eindeutig zugeordnet sind;
- Abtasten (205) der Umgebung eines Kraftfahrzeugs (105) mittels wenigstens eines Sensors (125), um ein Hindernis zu erfassen;
- Markieren (205) von Zellen (140) auf der Basis der Abtastung derart, dass
- eine Zelle (140), die einem hindernisfreien Abschnitt der Umgebung zugeordnet ist, eine erste Markierung trägt, und
- eine Zelle (140), die einem Abschnitt der Umgebung zugeordnet ist, in der ein Hindernis erfasst wurde, eine zweite Markierung trägt;
- Anwenden (215, 220, 225) eines morphologischen Filters auf die Repräsentation (135), um Zellen (140), die durch das Kraftfahrzeug (105) nicht erreicht werden können und zunächst die erste Markierung tragen, mit der zweiten Markierung zu versehen, wobei der morphologische Filter (215, 220) dazu eingerichtet ist, ein morphologisches Schließen mittels eines Strukturelements (405) durchzuführen und das Strukturelement (405) auf der Basis eines Umrisses des Kraftfahrzeugs (105) bestimmt (260) ist, wobei das Strukturelement (405) Einschränkungen reflektiert aufgrund welcher Zellen (140) nicht durch das Kraftfahrzeug (105) erreichbar sind, wobei das Strukturelement (405) zusätzlich auf der Basis eines Fahrzeugfreiheitsgrads bestimmt (260) ist, der durch das Fahrerassistenzsystem vorgegeben ist, wobei der Fahrzeugfreiheitsgrad wenigstens eines von einer maximalen Beschleunigung, einem minimalen Kurvenradius und einer Verkehrsvorschrift umfasst.

2. Verfahren (200) nach Anspruch 1, wobei der morphologische Filter (225) dazu eingerichtet ist, eine Faltung mit einer morphologischen Nachverarbeitung durchzuführen.

3. Verfahren (200) nach Anspruch 1 oder 2, wobei unterschiedlichen Bereichen der Umgebung unterschiedliche Fahrzeugfreiheitsgrade zugeordnet sind, für jeden Bereich ein zugeordnetes Strukturelement (405) bestimmt wird und der morphologische Filter (215, 220, 225) bereichsweise mit dem jeweils zugeordneten Strukturelement (405) angewandt wird.

4. Verfahren (200) nach einem der vorangehenden Ansprüche, wobei mehrere morphologische Filter (215, 220, 225) angewendet werden und Ausgaben der morphologischen Filter (215, 220, 225) derart miteinander kombiniert werden, dass nur Zellen (140) die erste Markierung erhalten, die in den Ausgaben aller Filter (215, 220, 225) die erste Markierung tragen.

5. Verfahren (200) nach einem der vorangehenden Ansprüche, wobei eine Fahrtrajektorie (605) für das Kraftfahrzeug (105) bestimmt und der morphologische Filter (215, 220, 225) auf der Basis der Fahrtrajektorie (605) angewandt wird.

6. Verfahren (200) nach einem der vorangehenden Ansprüche, wobei eine Bewegungstrajektorie eines beweglichen Hindernisses (130) in der Umgebung bestimmt und der morphologische Filter (215, 220, 225) auf der Basis der Bewegungstrajektorie angewandt wird.

7. Verfahren (200) nach einem der Ansprüche 5 oder 6 wobei das Strukturelement (405) in Abhängigkeit der Trajektorie (605) bestimmt wird.

8. Verfahren (200) nach einem der vorangehenden Ansprüche, wobei auf der Basis von Zellen (140), die dem Kraftfahrzeug (105) zugeordnet sind, ein angrenzendes Gebiet (305) bestimmt wird, in dem alle Zellen (140) die zweite Markierung tragen, und auf der Basis des Gebiets (305) ein Signal zur Bewegungssteuerung des Kraftfahrzeugs bestimmt (250) wird.

9. Verfahren (200) nach einem der vorangehenden Ansprüche, wobei vor dem Anwenden des morphologischen Filters (215, 220, 225) eine Strahlenverfolgung (210) erfolgt, die von einer Zelle (140) ausgeht, die dem Kraftfahrzeug (105) zugeordnet ist, und Zellen (140), die hindernisfrei in direkter Linie vom Kraftfahrzeug (105) aus erreichbar sind, mit der ersten Markierung, und Zellen (140), die vom Kraftfahrzeug (105) aus hinter einem Hindernis (130) liegen, mit der zweiten Markierung versehen werden.

10. Computerprogrammprodukt mit Programmcodemitteln zur Durchführung auf einer Vorrichtung nach Anspruch 11, des Verfahrens (200) nach einem der vorangehenden Ansprüche, wenn das Computerprogrammprodukt auf der Verarbeitungseinrichtung (110) abläuft oder auf einem computerlesbaren Datenträger gespeichert ist.

11. Vorrichtung (100) zur Situationsanalyse für ein Fahrerassistenzsystem an Bord eines Kraftfahrzeugs (105), umfassend:
- einen Speicher (115) zur Ablage einer Repräsentation (135) einer Umgebung des Kraftfahrzeugs (105), wobei die Repräsentation (135) eine Anordnung von Zellen (140) umfasst, die vorbestimmten Abschnitten der Umgebung umkehrbar eindeutig zugeordnet sind;
- eine Schnittstelle (120) für einen Sensor (125) zur Abtastung einer Umgebung des Kraftfahrzeugs (105), um ein Hindernis (130) zu erfassen, und
- eine Verarbeitungseinrichtung (110) zur Markierung von Zellen (140) auf der Basis der Abtastung derart, dass
- eine Zelle (140), die einem hindernisfreien Abschnitt der Umgebung zugeordnet ist, eine erste Markierung trägt, und
- eine Zelle (140), die einem Abschnitt der Umgebung zugeordnet ist, in der ein Hindernis erfasst wurde, eine zweite Markierung trägt;
- wobei die Verarbeitungseinrichtung (110) dazu eingerichtet ist, einen morphologischen Filter (215, 220, 225) auf die Repräsentation (135) anzuwenden, um Zellen (140), die durch das Kraftfahrzeug (105) nicht erreicht werden können und zunächst die erste Markierung tragen, mit der zweiten Markierung zu versehen, wobei der morphologische Filter (215, 220) dazu eingerichtet ist, ein morphologisches Schließen mittels eines Strukturelements (405) durchzuführen und das Strukturelement (405) auf der Basis eines Umrisses des Kraftfahrzeugs (105) bestimmt (260) ist, wobei das Strukturelement (405) Einschränkungen reflektiert aufgrund welcher Zellen (140) nicht durch das Kraftfahrzeug (105) erreichbar sind, wobei das Strukturelement (405) zusätzlich auf der Basis eines Fahrzeugfreiheitsgrads bestimmt (260) ist, der durch das Fahrerassistenzsystem vorgegeben ist, wobei der Fahrzeugfreiheitsgrad wenigstens eines von einer maximalen Beschleunigung, einem minimalen Kurvenradius und einer Verkehrsvorschrift umfasst.

## Claims

1. Method (200) for performing situation analysis for a driver assistance system on board a motor vehicle (105), comprising the following steps:
- providing a representation (135) of an environment of the motor vehicle (105), wherein the representation (135) comprises an arrangement of cells (140) that are assigned reversibly and unambiguously to predetermined sections of the environment;
- scanning (205) the environment of a motor vehicle (105) using at least one sensor (125) in order to detect an obstacle;
- marking (205) cells (140) on the basis of the scan such that
- a cell (140) that is assigned to an obstacle-free section of the environment bears a first marking, and
- a cell (140) that is assigned to a section of the environment in which an obstacle has been detected bears a second marking;
- applying (215, 220, 225) a morphological filter to the representation (135) in order to provide cells (140) that are not able to be reached by the motor vehicle (105) and that initially bear the first marking with the second marking, wherein the morphological filter (215, 220) is configured to perform a morphological closure using a structural element (405) and the structural element (405) is determined (260) on the basis of an outline of the motor vehicle (105), wherein the structural element (405) reflects restrictions based on which cells (140) are not able to be reached by the motor vehicle (105), wherein the structural element (405) is additionally determined (260) on the basis of a vehicle degree of freedom that is predefined by the driver assistance system, wherein the vehicle degree of freedom comprises at least one of a maximum acceleration, a minimum cornering radius and a traffic rule.

2. Method (200) according to Claim 1, wherein the morphological filter (225) is configured to perform a convolution with morphological post-processing.

3. Method (200) according to Claim 1 or 2, wherein different vehicle degrees of freedom are assigned to different regions of the environment, an assigned structural element (405) is determined for each region and the morphological filter (215, 220, 225) is applied in regions with the respectively assigned structural element (405).

4. Method (200) according to one of the preceding claims, wherein multiple morphological filters (215, 220, 225) are applied and outputs of the morphological filters (215, 220, 225) are combined with one another such that only cells (140) that bear the first marking in the outputs of all filters (215, 220, 225) receive the first marking.

5. Method (200) according to one of the preceding claims, wherein a driving trajectory (605) is determined for the motor vehicle (105) and the morphological filter (215, 220, 225) is applied on the basis of the driving trajectory (605).

6. Method (200) according to one of the preceding claims, wherein a motion trajectory of a movable obstacle (130) in the environment is determined and the morphological filter (215, 220, 225) is applied on the basis of the motion trajectory.

7. Method (200) according to either of Claims 5 and 6, wherein the structural element (405) is determined on the basis of the trajectory (605).

8. Method (200) according to one of the preceding claims, wherein cells (140) that are assigned to the motor vehicle (105) are taken as a basis for determining an adjoining area (305) in which all cells (140) bear the second marking, and a signal for controlling the motion of the motor vehicle is determined (250) on the basis of the area (305).

9. Method (200) according to one of the preceding claims, wherein, before the morphological filter (215, 220, 225) is applied, ray tracing (210) takes place, starting from a cell (140) that is assigned to the motor vehicle (105), and cells (140) that are able to be reached in a direct line without any obstacles starting from the motor vehicle (105) are provided with the first marking, and cells (140) that are located behind an obstacle (130) starting from the motor vehicle (105) are provided with the second marking.

10. Computer program product containing program code means for performing the method (200) according to one of the preceding claims on a device according to Claim 11 when the computer program product runs on the processing device (110) or is stored on a computer-readable data carrier.

11. Device (100) for performing situation analysis for a driver assistance system on board a motor vehicle (105), comprising:
- a memory (115) for storing a representation (135) of an environment of the motor vehicle (105), wherein the representation (135) comprises an arrangement of cells (140) that are assigned reversibly and unambiguously to predetermined sections of the environment;
- an interface (120) for a sensor (125) for scanning an environment of the motor vehicle (105) in order to detect an obstacle (130), and
- a processing device (110) for marking cells (140) on the basis of the scan such that
- a cell (140) that is assigned to an obstacle-free section of the environment bears a first marking, and
- a cell (140) that is assigned to a section of the environment in which an obstacle has been detected bears a second marking;
- wherein the processing device (110) is configured to apply a morphological filter (215, 220, 225) to the representation (135) in order to provide cells (140) that are not able to be reached by the motor vehicle (105) and that initially bear the first marking with the second marking, wherein the morphological filter (215, 220) is configured to perform a morphological closure using a structural element (405) and the structural element (405) is determined (260) on the basis of an outline of the motor vehicle (105), wherein the structural element (405) reflects restrictions based on which cells (140) are not able to be reached by the motor vehicle (105), wherein the structural element (405) is additionally determined (260) on the basis of a vehicle degree of freedom that is predefined by the driver assistance system, wherein the vehicle degree of freedom comprises at least one of a maximum acceleration, a minimum cornering radius and a traffic rule.

## Revendications

1. Procédé (200) d'analyse de la situation pour un système d'assistance au conducteur à bord d'un véhicule automobile (105), comprenant les étapes suivantes :
- fourniture d'une représentation (135) d'un environnement du véhicule automobile (105), la représentation (135) comprenant un arrangement de cellules (140) qui sont associées de manière unique et réversible à des portions prédéterminées de l'environnement ;
- balayage (205) de l'environnement d'un véhicule automobile (105) au moyen d'au moins un capteur (125) afin de détecter un obstacle ;
- marquage (205) de cellules (140) sur la base du balayage de telle sorte que
- une cellule (140) qui est associée à une portion sans obstacle de l'environnement porte un premier marqueur, et
- une cellule (140) qui est associée à une portion de l'environnement dans laquelle un obstacle a été détecté porte un deuxième marqueur ;
- application (215, 220, 225) d'un filtre morphologique sur la représentation (135) afin de doter du deuxième marqueur les cellules (140) qui ne peuvent pas être atteintes par le véhicule automobile (105) et qui portent initialement le premier marqueur, le filtre morphologique (215, 220) étant conçu pour effectuer une fermeture morphologique au moyen d'un élément structural (405) et l'élément structural (405) étant déterminé (260) sur la base d'un contour du véhicule automobile (105), l'élément structural (405) reflétant des restrictions en raison desquelles des cellules (140) ne peuvent pas être atteintes par le véhicule automobile (105), l'élément structural (405) étant en plus déterminé (260) sur la base d'un degré de liberté du véhicule qui est prédéfini par le système d'assistance au conducteur, le degré de liberté du véhicule comprenant au moins une accélération maximale, un rayon de courbure minimal et/ou une règle de circulation.

2. Procédé (200) selon la revendication 1, le filtre morphologique (225) étant conçu pour effectuer une convolution avec un post-traitement morphologique.

3. Procédé (200) selon la revendication 1 ou 2, différents degrés de liberté du véhicule étant associés à différentes zones de l'environnement, un élément structural (405) associé étant déterminé pour chaque zone et le filtre morphologique (215, 220, 225) étant appliqué par zone avec l'élément structural (405) respectivement associé.

4. Procédé (200) selon l'une des revendications précédentes, plusieurs filtres morphologiques (215, 220, 225) étant appliqués et les sorties des filtres morphologiques (215, 220, 225) étant combinées entre elles de telle sorte que seules reçoivent le premier marqueur les cellules (140) qui portent le premier marqueur dans les sorties de tous les filtres (215, 220, 225) .

5. Procédé (200) selon l'une des revendications précédentes, une trajectoire de déplacement (605) du véhicule automobile (105) étant déterminée et le filtre morphologique (215, 220, 225) étant appliqué sur la base de la trajectoire de déplacement (605).

6. Procédé (200) selon l'une des revendications précédentes, une trajectoire de déplacement d'un obstacle (130) mobile dans l'environnement étant déterminée et le filtre morphologique (215, 220, 225) étant appliqué sur la base de la trajectoire de déplacement.

7. Procédé (200) selon l'une des revendications 5 ou 6, l'élément structural (405) étant déterminé en fonction de la trajectoire (605).

8. Procédé (200) selon l'une des revendications précédentes, une région (305) adjacente étant déterminée sur la base de cellules (140) qui sont associées au véhicule automobile (105), dans laquelle toutes les cellules (140) portent le deuxième marquage, et un signal servant à la commande de déplacement du véhicule automobile étant déterminé (250) sur la base de la région (305) .

9. Procédé (200) selon l'une des revendications précédentes, un suivi de rayon (210) étant effectué avant d'appliquer le filtre morphologique (215, 220, 225), lequel émane d'une cellule (140) qui est associée au véhicule automobile (105), et les cellules (140) qui sont accessibles en ligne directe sans obstacle depuis le véhicule automobile (105) étant dotées du premier marqueur, et les cellules (140) qui se trouvent derrière un obstacle (130) à partir du véhicule automobile (105) étant dotées du deuxième marqueur.

10. Produit de programme informatique comprenant des moyens de code de programme destinés à la mise en œuvre, sur un système selon la revendication 11, du procédé (200) selon l'une des revendications précédentes, lorsque le produit de programme informatique est exécuté sur le moyen de traitement (110) ou est stocké sur un support de données lisible par ordinateur.

11. Dispositif (100) d'analyse de la situation pour un système d'assistance au conducteur à bord d'un véhicule automobile (105), comprenant :
- une mémoire (115) destinée au stockage d'une représentation (135) d'un environnement du véhicule automobile (105), la représentation (135) comprenant un arrangement de cellules (140) qui sont associées de manière unique et réversible à des portions prédéterminées de l'environnement ;
- une interface (120) pour un capteur (125) destiné à balayer un environnement du véhicule automobile (105) afin de détecter un obstacle (130), et
- un moyen de traitement (110) destiné à marquer des cellules (140) sur la base du balayage de telle sorte que
- une cellule (140) qui est associée à une portion sans obstacle de l'environnement porte un premier marqueur, et
- une cellule (140) qui est associée à une portion de l'environnement dans laquelle un obstacle a été détecté porte un deuxième marqueur ;
- le moyen de traitement (110) étant conçu pour appliquer un filtre morphologique (215, 220, 225) à la représentation (135) afin de doter du deuxième marqueur les cellules (140) qui ne peuvent pas être atteintes par le véhicule automobile (105) et qui portent initialement le premier marqueur, le filtre morphologique (215, 220) étant conçu pour effectuer une fermeture morphologique au moyen d'un élément structural (405) et l'élément structural (405) étant déterminé (260) sur la base d'un contour du véhicule automobile (105), l'élément structural (405) reflétant des restrictions en raison desquelles des cellules (140) ne peuvent pas être atteintes par le véhicule automobile (105), l'élément structural (405) étant en plus déterminé (260) sur la base d'un degré de liberté du véhicule qui est prédéfini par le système d'assistance au conducteur, le degré de liberté du véhicule comprenant au moins une accélération maximale, un rayon de courbure minimal et/ou une règle de circulation.
